Europäisches Patentamt

European Patent Office

Office européen des brevets

(19)

(11) Veröffentlichungsnummer: **0 261 323 B1**

## EUROPÄISCHE PATENTSCHRIFT

(12)

(45) Veröffentlichungstag der Patentschrift: **23.10.91**

(51) Int. Cl.⁵: **B60J 1/18**

(21) Anmeldenummer: **87109428.0**

(22) Anmeldetag: **30.06.87**

(54) Schutzabdeckung für kratzempfindliche Sichtscheiben.

(30) Priorität: **22.09.86 DE 3632148**

(43) Veröffentlichungstag der Anmeldung:
**30.03.88 Patentblatt 88/13**

(45) Bekanntmachung des Hinweises auf die
Patenterteilung:
**23.10.91 Patentblatt 91/43**

(84) Benannte Vertragsstaaten:
**AT BE DE FR GB IT NL SE**

(56) Entgegenhaltungen:
**DE-U- 1 813 869**

(73) Patentinhaber: **ED. Scharwächter GmbH &
Co.KG.
Hohenhagenerstrasse 26-28
W-5630 Remscheid 1(DE)**

(72) Erfinder: **Brockhaus, Ernst
Ibacherstrasse 56
W-5630 Remscheid-Hasten(DE)**

(74) Vertreter: **Schön, Theodor, Patent- und Zivilingenieur
Sonnleiten 7
W-8311 Moosthenning 1(DE)**

## Beschreibung

Die Erfindung bezieht sich auf eine Schutzabdeckung für kratzemfindliche Sichtscheiben, insbesondere Heckscheiben in faltbaren Kabrio-Verdecken, die entlang ihres Umfanges in einem einen Scheibenrahmen bildenden Umschlag aus Bezugsstoff eingeschweißt und mit diesem zusätzlich vernäht sowie während der Herstellung und Montage des Verdeckes mittels einer aus einem mechanisch schwachen, aber weichen und dem Scheibenmaterial gegenüber neutralem Material, z. B. einem Flies und einer Folie hoher mechanischer Festigkeit bestehenden Abdeckung versehen sind.

An Sichtscheiben in Kraftfahrzeugen werden verschiedene, sich zum Teil widersprechende Anforderungen gestellt, was zum einen Teil für sogenannte Sicherheitsscheiben, im besonderen aber für die Heckscheiben von faltbaren Carbriolet-Verdecken gilt, die zum einen gute optische Eigenschaften aufweisen müssen, um eine klare und verzerrungsfreie Durchsicht zu gewährleisten, dabei aber sowohl hinreichend steif sein müssen, damit sie dich im gespannten Zustand, d. h. bei geschlossenem Verdeck in eine möglichst wellenfreie Form legen, auf der anderen Seite aber hinreichen flexibel sein müssen, damit sie, da sie ja in das Verdeck des Cabriolets integriert sind, den Faltvorgang des Verdeckes beim Öffnen desselben mitmachen können, ohne dabei zu knicken oder bleibende Verformungen zu erleiden. Für die Heckscheibe in faltbaren Cabriolet-Verdecken werden daher Sichtscheiben aus einem Kunststoffmaterial verwendet, welches einerseits exzellente optische Eigenschaften, insbesondere klare Durchsicht gewährleistet und andererseits hinreichend biegsam ist, um den Faltvorgang beim Öffnen des Verdeckes mitmachen zu können. Die für die Herstellung solcher Scheiben bekannten und verfügbaren Materialien sind aber mit dem Nachteil einer ausserordentlichen Kratzempfindlichkeit behaftet, so daß die erhebliche Gefahr besteht, daß die Scheiben bereits während des Herstellungs- und Montagevorganges für das Kabrio-Verdeck beschädigt und somit hinsichtlich ihrer optischen Eigenschaften und insbesondere ihrer klaren Durchsicht erheblich geschädigt werden.

Darüber hinaus sind für die Verwendung zur Herstellung der Sichtscheiben und insbesondere der Heckscheiben in Cabrio-Verdecken bekannten und gebräuchlichen Materialien auch noch äußerst empfindlich gegen Klebemittel, so daß auch das Aufkleben einer Abdeckung, die sie während des Herstellungs- und Montagevorganges des Cabriolet-Verdeckes schützen soll, ungünstig ist.

Um die verstehend aufgezeigte, aus der Materialbeschaffenheit der für die Herstellung von Sichtscheiben in Cabriolet-Verdecken verwendeten Materialien resultierenden Schwierigkeiten zu vermeiden, wurden die Sichtscheiben in Cabriolet-Verdecken bisher durch eine beidseitige Abdeckung mittels eines weichen, gegenüber dem Material der Sichtscheibe neutralen Materials, insbesondere eines Vlieses und einer zusätzlichen Folie aus reißfestem Material überdeckt, welche vermittels Klebestreifen am umgebenden Rand der Sichtscheibe am Verdeck-Bezugsstoff befestigt wurden. Eine derartige Verfahrensweise, die das übereinander liegende Anbringen zweier verschiedener Abdekkungsmaterialien und ferner das Ankleben derselben mittels besonderer Klebestreifen am Verdeck-Bezugsstoff erfordert naturgemäß auch einen sehr hohen Aufwand an Material und Arbeitszeit, was sich hinsichtlich der Herstellungskosten für das Cabriolet-Verdeck negativ auswirken muß.

Ausgehend von diesem bekannten Stand der Technik liegt der Erfindung daher die Aufgabe zugrunde, Mittel und Wege aufzuzeigen, mit deren Hilfe die Herstellung von Cabriolet-Verdecken mit Sichtscheiben, insbesondere Sichtscheiben im Heck des Fahrzeuges, wesentlich kostengünstiger und sicherer durchgeführt werden kann. Die Aufgabe der Erfindung erstreckt sich ferner darauf, die Sichtscheibe, insbesondere im Heck eines Cabriolet-Verdeckes möglichst bis zur Auslieferung des Fahrzeuges an den Kunden vor jeder möglichen Art einer Beschädigung zu schützen, ohne dabei aber sich des Vorteils einer Kontrolle der Scheibe bei Anlieferung des Bauteiles zu begeben.

Diese Aufgabe wird erfindungsgemäß dadurch gelöst, daß die Schutzabdeckung eingenäht wird und zum leichten Entfernen an ihren eingenähten Randzonen mit zackenförmigen oder unterbrochenen Randabschnitten versehen ist.

Eine dieser Art gestaltete Abdeckung für kratzempfindliche Scheiben, insbesondere die Heckscheiben in faltbaren Cabrio-Verdecken, kann zusammen mit der Scheibe mit dem ihren Scheibenrahmen bildenden Stoffumschlag vernäht werden, ohne daß hierfür ein besonderer Arbeitsaufwand entsteht. Weiterhin kann die die Sichtscheibe schützende Abdeckung zu jedem beliebigen Zeitpunkt während oder nach der Herstellung und Montage des Cabriolet-Verdeckes ganz oder teilweise abgenommen werden, was zweckmäßigerweise durch einfaches Abreißen erfolgt, wobei dies bei geeigneter Ausbildung derjenigen Abschnitte ihres Umfanges, über welche die Abdeckung mit dem den Scheibenrahmen bildenden Stoffumschlag sowie der Scheibe vernäht ist, ohne spätere sichtbare bzw. mühsam zu entfernende Rückstände erfolgen kann.

Eine Ausführungsform der Erfindung sieht vor, daß die Abdeckung auch entlang wenigstens einer oder zweier der Längs-Umfangsränder der Scheibe mit zackenförmigen, die lichte Grundfläche der Scheibe überragenden Vorsprüngen versehen ist, über welche sie zwischen die Scheibe und den den Scheibenrahmen bildenden Umschlag aus Bezugsstoff eingenäht ist, derart, daß sie durch einfaches Abreißen ohne sichtbaren Rückstand entfernbar ist. Die zackenförmigen Vorsprünge weisen dabei zu ihrem freien Ende hin spitz auslaufende Profilformen auf, während sie im Bereich ihres Profilgrundes vorteilhafterweise über wenigstens teilkreisförmige Ausschnitte aneinander anschließen und wobei die teilkreisförmigen Ausschnitte zur Erzielung einer vollständigen Abdeckung der zu schützenden Scheibe selbstverständlich ausserhalb der lichten Grundfläche der Scheibe angeordnet sind. Die teilkreisförmige Ausbildung der Ausschnitte zwischen den einander benachbaren zackenförmigen Vorsprüngen der Abdeckung hat sich insofern als besonders vorteilhaft erwiesen, als hierdurch beim Entfernen der Abdeckung unerwünschte Querrisse vermieden werden.

Nach einer weiteren, besonders bevorzugten Ausgestaltungsform der Erfindung kann die Abdeckung aus zwei einander überlappenden Abschnitten bzw. Teilen bestehen, die entlang wenigstens ihrer jeweiligen freien Längsränder mittels über die lichte Scheibenfläche verstehender Lappen oder Zakkenanordnungen mit den durch einen Umschlag aus Bezugsstoff gebildeten Scheibenrahmen und der Scheibe vernäht ist, wobei sich die Vernähung lediglich über wenigstens die beiden zueinander parallelen Scheibenlängsränder hin erstreckt. Dabei ist zweckmäßigerweise wenigstens einer der beiden Abdeckungsabschnitte bzw. Abdeckungsteile und wenigstens entlang eines Schmalrandes der lichten Scheibenfläche mit einem losen, diese übergreifenden und einen Handgriff bildenden Lappen versehen, so daß der jeweilige Abdeckungsabschnitt bzw. Abdeckungsteil zum Zwecke der Kontrolle der Scheibe mühelos von dieser abhebbar ist. Die beiden Abdeckungsabschnitte bzw. Abdeckungsteile sind dabei ferner zweckmäßigerweise untereinander durch im gegenseitigen Überdeckungsbereich angeordnete Haftflächenabschnitte, insbesondere Klebestreifen untereinander verbunden, derart, daß die vorübergehend voneinander lösbar und wiederholbar miteinander verbindbar sind.

Nach einer weiteren Ausführungsform der Erfindung kann aber auch vorgesehen sein, daß die Abdeckung entlang wenigstens ihrer beiden Längsrandbereiche die lichte Grundfläche der Scheibe überragende, im Abstand voneinander angeordnete Lappen aufweist, über welche sie mit dem Scheibenrahmen und der Scheibe vernäht ist. Dadurch ist gewährleistet, daß die Abdeckung einerseits die gesamte lichte Grundfläche der Scheibe überdeckt und somit auch in deren Randbereichen jedwede Beschädigung verhindert, andererseits aber ohne sichtbaren Rückstand abreißbar ist, sobald das Verdeck bzw. das Fahrzeug fertig montiert sind. Die die lichte Grundfläche der Scheibe überrangenden Lappen der Abdeckung sind dabei vorteilhafterweise in einem ein Mehrfaches ihrer eigenen Längserstreckung betragenden Abstand voneinander angeordnet, und können naturgemäß nicht nur an den jeweiligen Längsseiten der Scheibe, sondern über deren ganzem Umfang hin mehr oder minder gleichmäßig verteilt angeordnet sein.

Eine weitere zweckmäßige Ausgestaltungsform der Erfindung ist darin zu sehen, daß die Abdeckung auf den den Scheibenrahmen bildenden Umschlag aus Bezugsstoff aufliegend mit diesem und der Scheibe vernäht ist, wobei die Abdeckung in ihrem Randbereich zackenförmige Vorsprünge aufweist, die von der die Scheibe mit dem Scheibenrahmen verbindenden Naht durchsetzt und zweckmäßigerweise in einem ein Vielfaches ihrer eigenen Breite betragenden Abstand voneinander angeordnet sind. Die Abdeckung kann dabei weiterhin lediglich entlang eines der Umfangsränder der Scheibe mit dieser und dem Scheibenrahmen vernäht sein, während sich die verbleibenden drei Umfangsränder der Scheibe mindestens um den Betrag der Breite des Scheibenrahmens übergreift und dabei lose auf dem Scheibenrahmen aufliegt.

Die Erfindung ist in der nachfolgenden Beschreibung einiger Ausführungsbeispiele im einzelnen beschrieben.

In der Zeichnung zeigt die

Figur 1    eine teilweise schematische Rückansicht einer mit einer erfindungsgemäßen Abdeckung versehenen Heckscheibe eines Cabrio-Verdeckes;

Figur 2    einen teilweisen Ausschnitt zu Figur 1 in schaubildlicher Darstellung;

Figur 3    eine teilweise Rückansicht einer anderen Ausführungsform einer mit einer erfindungsgemäßen Abdeckung versehenen Heckscheibe eines Cabrio-Verdeckes;

Figur 4    eine teilweise Darstellung der zakkenförmigen Umfangsprofilierung einer Abdeckung für die Heckscheibe eines Cabrio-Verdeckes;

Figur 5    eine Rückansicht einer anderen Ausführungsform einer erfindungsgemäßen Abdeckung für die Heckscheibe eines Cabrio-Verdeckes.

Figur 6    eine Rückansicht einer weiteren Ausführungsform einer Abdeckung für die Heckscheibe eines Cabrio-Verdeckes.

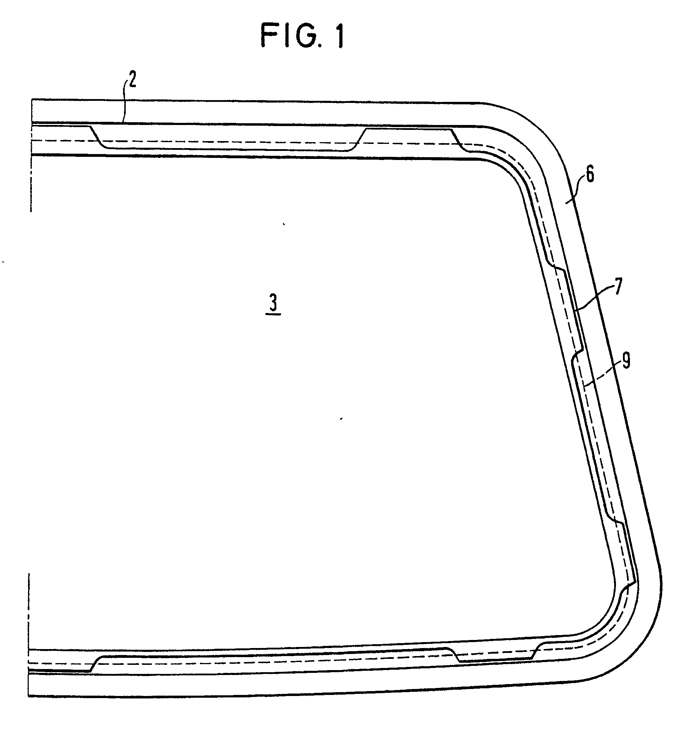

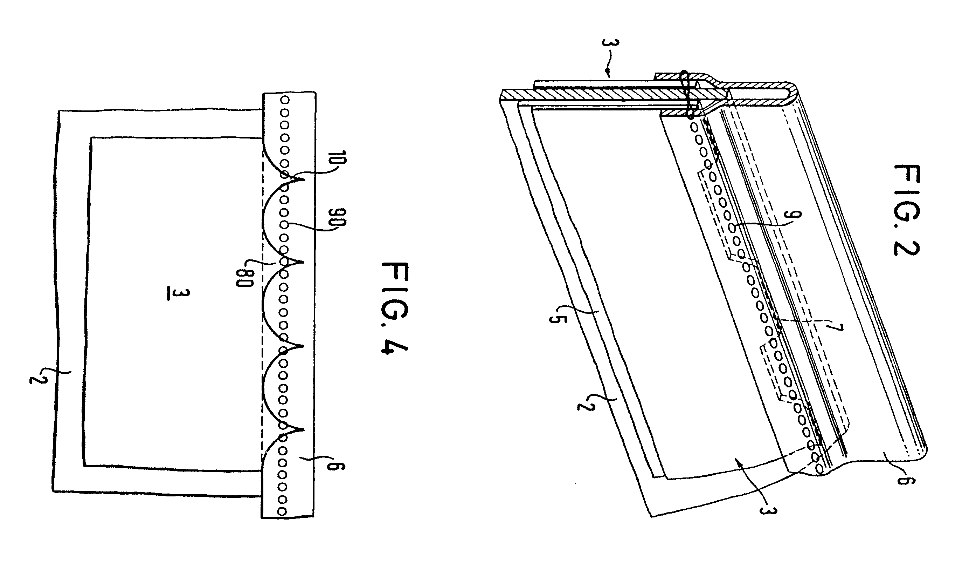

Im Bereich der Heckwand eines Cabriolet-Verdeckes 1 ist eine Sichtscheibe 2 angeordnet. Die Sichtscheibe 2 besteht aus einem als solches nicht kratzfestem, jedoch biegeweichen und ausreichend steifem Kunststoffmaterial und ist im gezeigten Ausführungsbeispiel während des Herstellungs- und Montagevorganges des Cabrio-Verdeckes 1 beidseitig durch eine Schutzabdeckung 3 abgedeckt. Die Schutzabdeckung 3 besteht aus einer Folie 4 mit hoher mechanischer Festigkeit und einem aufkaschierten Vlies 5, mit an sich geringer mechanischer Festigkeit, jedoch aus einem dem Scheibenmaterial gegenüber neutralem Material, derart, daß weder durch Hitze- oder Kälteeinwirkung noch durch mechanische Berührung eine Beeinträchtigung der optischen Eigenschaften der Sichtscheibe 2 eintreten kann. Wie insbesondere im Ausführungsbeispiel nach Figur 2 dargestellt, ist die Sichtscheibe 2 beidseitig von einer Abdeckung 3 übergriffen und sind beide Abdeckungen 3 zusammen mit der Sichtscheibe 2 mit einem einem Scheiberahmen 6 bildenden Umschlag aus Bezugsstoff vernäht. Mit dem den Scheibenrahmen 6 bildenden Umschlag aus Bezugsstoff ist die Sichtscheibe 2 über einen Randzonenbereich hin verschweißt und zusätzlich über eine Naht 7 verbunden. Die Naht 7 durchsetzt dabei den Scheibenrahmen 6 die Sichtscheibe 2 und die beiden Abdeckungen 3, wobei die Abdeckungen 3 die verbleibende lichte Fläche der Sichtscheibe 2 überragenden Lappen 7 oder zackenförmige Vorsprünge 8 aufweist, mittels derer sie zusammen mit der Scheibe mit dem den Scheibenrahmen 6 bildenden Umschlag aus Besugsstoff vernäht sind. Bei den in den Figuren 1 und 2 gezeigten Ausführungsbeispiel weisen die Abdeckungen 3 jeweils die lichte Fläche der Sichtscheibe 2 übergreifende Abschnitte oder Lappen 7 auf, die in einem vorzugsweise einem Mehrfachen ihrer eigenen Länge entsprechenden Abstand voneinander angeordnet und mit der Scheibe 2 sowie den den Scheibenrahmen 6 bildenden Umschlag aus Bezugsstoff vernäht sind. Dies ermöglicht es, die Abdeckungen 3 durch einfaches Abreißen von der Sichtscheibe 2 zu entfernen, ohne daß dabei irgendein sichtbarer Rückstand im lichten Bereich der Grundfläche der Sichtscheibe 2 verbleibt, da die die Scheibe 2, den Scheibenrahmen 6 und die Abdeckungen 3 verbindende Naht 9 mit einem gewissen Abstand ausserhalb der lichten Grundfläche der Sichtscheibe 2 angeordnet ist. Hervorzuheben ist dabei, daß die Übergänge zwischen den Lappen 7, der Abdeckung 3 und deren die lichte Grundfläche der Sichtscheibe 2 überdeckenden Bereiche jeweils bogenförmig ist, so daß beim Abreißen der Abdeckung 3 keine rechtwinklig oder im spitzen Winkel zur Naht 90 gerichtete Risse entstehen können, was wiederum ein Entfernen der Abdeckung 3 ohne in den lichten Grundrißbereich der Scheibe 2 hineinragende Rückstände der Abdeckung 34 ermöglicht.

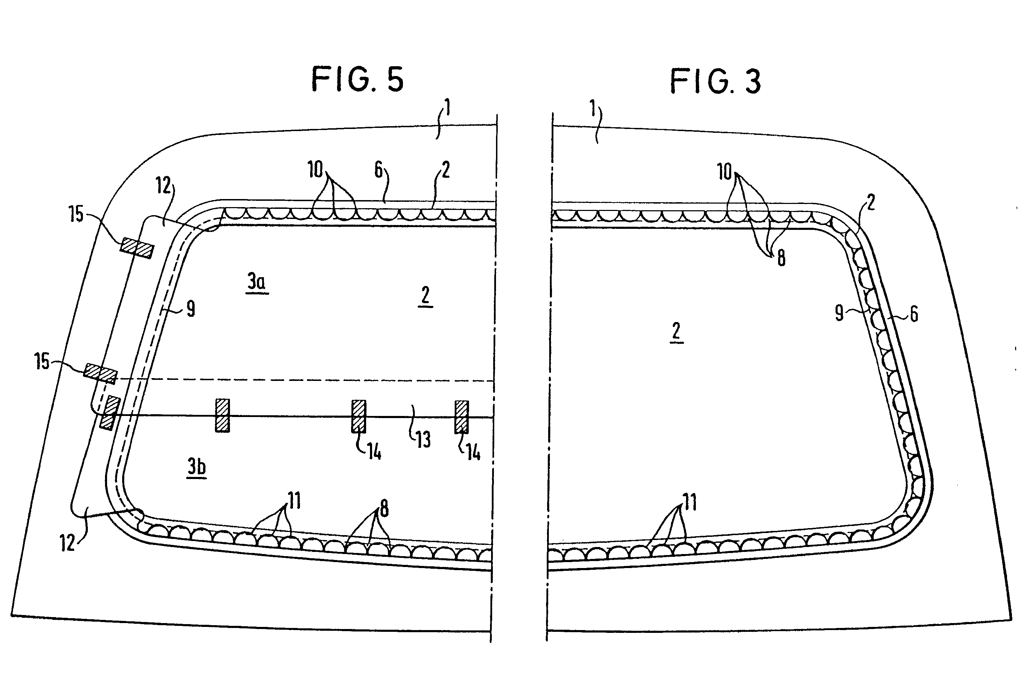

In den Figuren 3 und 4 ist besonders vorteilhafte Ausbildung zackenförmiger, die lichte Grundfläche der Scheibe 2 überragender Vorsprünge an der Abdeckung 3 dargestellt, wobei vorgesehen ist, daß die zackenförmigen Vorsprünge 8 zu ihrem freien Ende 10 hin jeweils spitz auslaufen, während sie in ihrem Fußbereich mit dem jeweils benachbarten Zacken über wenigstens teilweise kreisförmige Ausschnitte 11 miteinander verbunden sind.

Die teilkreisförmigen Ausschnitte sind dabei durch in die Zackenform übergehende Rundungen gebildet.

Wie sowohl aus der Darstellung der Figur 1, wie auch aus den Darstellungen der Figuren 2 und 3 ersichtlich, sind die lappenförmigen 7 oder die zackenförmigen Vorsprünge 8 der Scheibenabdeckung jeweils so angeordnet, daß sie ausserhalb der lichten Grundfläche der Sichtscheibe liegen und damit die Sichtscheibe über ihre gesamte Fläche hin vor schädigenden Einflüssen gesichert ist, solange sie von den Schutzabdeckungen überdeckt ist.

Bei dem Ausführungsbeispiel gemäß Figur 5 sind die Abdeckungen 3 jeweils entlang deren oberen und unteren Randbereichen mit der Scheibe 2 sowie dem den Scheibenrahmen 6 bildenden Stoffumschlag vernäht, während sich der Schmalseite der Scheibe 2 über deren lichte Grundfläche, Grifflappen bildende Lappen 12 befinden. Die Scheibenabdeckungen sind dabei insgesamt in zwei Teile 3a und 3b unterteilt, wobei sich beide Teilbereiche bei 13 überdecken. Im Bereich ihrer Überdeckung 13 sind die beiden Teile 3a und 3b der Scheibenabdeckung 3 untereinander vermittels Klebestreifen 14 verbunden, so daß es möglich ist, den einen und/oder den anderen Teilbereich der Scheibenabdeckung 3 anzuheben, beispielsweise zum Zwecke der Qualitätskontrolle der Sichtscheibe als solcher. Wie im gezeigten Ausführungsbeispiel weiterhin dargestellt, können die die lichte Grundfläche der Sichtscheibe übergreifenden, als Handgriff dienenden Lappen 12 zusätzlich über Klebestreifen 15 auch am Bezugsstoff des üblichen Cabriolet-Verdeckes 1 gehalten sein.

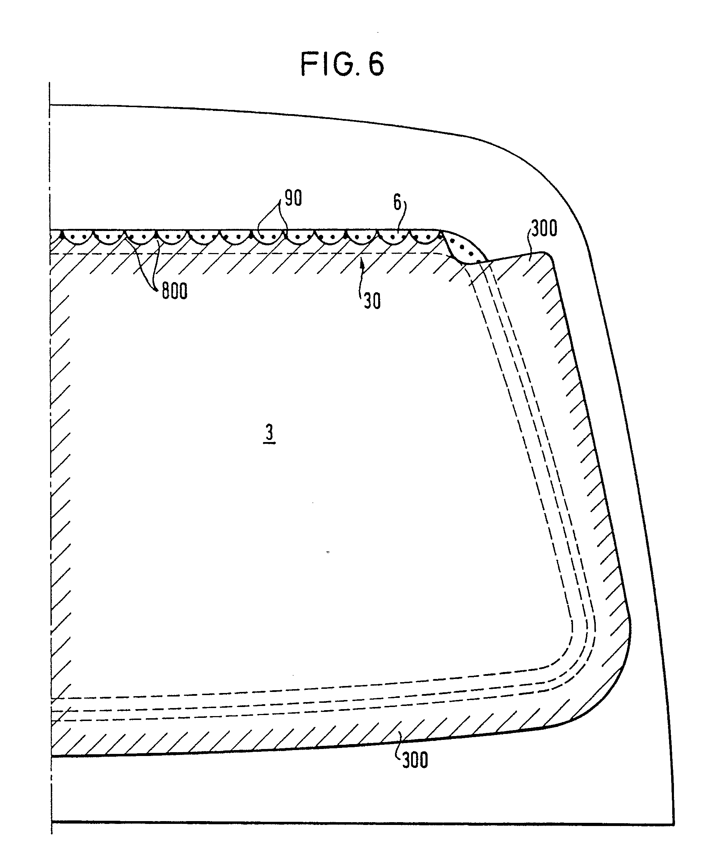

Bei dem Ausführungsbeispiel nach Figur 6 ist vorgesehen, daß die Abdeckung 3 aussenseitig auf dem durch einen Umschlag aus Bezugsstoff 6 gebildeten Scheibenrahmen aufliegend mit diesem und der Scheibe 2 derart vernäht ist, daß die Naht 90 lediglich am Rand 30 der Abdeckung 3 angeordnete zackenförmige Vorsprünge 800, die hinsichtlich ihrer Ausbildung im wesentlichen derjenigen nach Figur 4 entsprechen, durchsetzt. Die Abdeckung 3 ist im gezeigten Ausführungsbeispiel mit dem Scheibenrahmen 6 und der Scheibe 2 lediglich entlang des oberen Scheibenrahmens über die zackenförmigen Vorsprünge 800 vernäht und übergreift die verbleibenden drei Ränder der Scheibe mindestens um den Betrag der Breite des Scheibenrahmens 6, wobei sie in diesen Bereichen 300 lose auf dem Scheibenrahmen 6 aufliegt.

**Patentansprüche**

1. Schutzabdeckung für kratzempfindliche Sichtscheiben, insbesondere Heckscheiben in faltbaren Cabrio-Verdecken, die entlang ihres Umfanges in einen einen Scheibenrahmen bildenden Umschlag aus Bezugsstoff eingeschweißt und mit diesem zusätzlich vernäht sowie während der Herstellung und der Montage des Verdeckes mittels einer aus einem mechanisch schwachen, aber weichen und dem Scheibenmaterial gegenüber neutralen Material, z. B. einem Vlies und einer Folie hoher mechanischer Festigkeit bestehenden Abdeckung versehen sind, dadurch gekennzeichnet, daß die Schutzabdeckung (3 ) eingenäht wird und zum leichteren Entfernen an ihren eingenähten Randzonen mit zackenförmigen (8,800) oder unterbrochenen Randabschnitten (7) versehen ist.

2. Schutzabdeckung nach Anspruch 1, dadurch gekennzeichnet, daß die Abdeckung (3) entlang wenigstens zwei, deren Umfangsränder die lichte Scheibenfläche überragende zackenförmige Vorsprünge (8,800) aufweist und daß diese mit dem den Scheibenrahmen (6) bildenden Umschlag aus Bezugsstoff sowie der Scheibe (2) vernäht sind.

3. Schutzabdeckung nach Anspruch 1 und 2, dadurch gekennzeichnet, daß die zachenförmigen Vorsprünge (8,800) zu ihrem freien Ende hin spitz auslaufen und im Bereich ihres Profilgrundes über wenigstens teilkreisförmige Ausschnitte (11) aneinander anschließen, wobei die teilkreisförmigen Ausschnitte (11) ebenfalls noch ausserhalb der lichten Grundfläche der Scheibe (2) angeordnet sind.

4. Schutzabdeckung nach einem oder mehreren der vorangehenden Ansprüche 1 bis 3, dadurch gekennzeichnet, daß die Abdeckung (3) aus zwei einander überlappenden Abschnitten (3a und 3b) bzw. Teilen besteht, die entlang wenigstens ihrer jeweiligen Längsränder mittels über die lichte Scheibenfläche vorstehender Lappen- oder Zackenanordnungen mit dem den Scheibenrahmen bildenden Umschlag aus Bezugsstoff (6) und der Scheibe (2) vernäht sind.

5. Schutzabdeckung nach einem oder mehreren der vorangehenden Ansprüche 1 bis 4, dadurch gekennzeichnet, daß wenigstens einer der beiden Abdeckungsabschnitte (3a und 3b) oder Abdeckungsteile wengistens entlang einer Schmalseite der lichten Scheibenfläche mit einem losen, diese übergreifenden und einen Handgriff bildenden Lappen (12) versehen ist.

6. Schutzabdeckung nach einem oder mehreren der vorangehenden Ansprüche 1 bis 5, dadurch gekennzeichnet, daß die beiden Abdeckungsabschnitte (3, 3b) untereinander durch im gegenseitigen Überlappungsbereich angeordnete Haftflächenabschnitte (14) vorübergehend und wiederholbar miteinander verbindbar sind.

7. Schutzabdeckung nach einem oder mehreren der vorangehenden Ansprüche 1 bis 6, dadurch gekennzeichnet, daß die Haftflächenabschnitte (14) durch aufgesetzte Abschnitte von Klebestreifen oder drgl. gebildet sind.

8. Schutzabdeckung nach Anspruch 1 bis 7, dadurch gekennzeichnet, daß die die Abdeckung (3), den Umschlag aus Bezugsstoff (6) und die Scheibe (2) durchsetzende Naht (9) mit einem Abstand zu deren Umfangsränder ausserhalb der lichten Grundfläche der Scheibe (2) angeordnet ist.

9. Schutzabdeckung nach Anspruch 8, dadurch gekennzeichnet, daß die Abdeckung (3) entlang wenigstens ihrer beiden Längsrandbereiche die lichte Grundfläche der Scheibe überragende, im Abstand voneinander angeordnete Lappen (7) aufweist und über diese mit dem den Scheibenrahmen bildenden Umschlag (6) und der Scheibe (2) vernäht ist.

10. Schutzabdeckung nach Anspruch 9, dadurch gekennzeichnet, daß die die lichte Grundfläche der Scheibe überragenden Lappen (7) der Abdeckung (3) in einem ein Mehrfaches ihrer Längserstreckung betragenden Abstand voneinander angeordnet sind.

11. Schutzabdeckung nach einem oder mehreren der vorangehenden Ansprüche 9 und 10, dadurch gekennzeichnet, daß die die lichte Grundfläche der Scheibe (2) überragende Lappen (7) über den gesamten Scheibenumfang hin an der Abdeckung (3) ausgebildet sind.

12. Schutzabdeckung für kratzempfindliche Sichtscheiben, insbesondere Heckscheiben in faltbaren Cabrio-Verdecken, die entlang ihres Umfanges in einen einen Scheibenrahmen bildenden Umschlag aus Bezugsstoff eingeschweißt und mit diesem zusätzlich vernäht sowie während der Herstellung und der Montage des Verdeckes mittels einer aus einem mechanisch schwachen, aber weichen und dem Scheibenmaterial gegenüber neutralem Material, z. B. einem Flies und einer Folie hoher mechanischer Festigkeit bestehenden Abdeckung versehen sind, dadurch gekennzeichnet, daß die Abdeckung (3) aussenseitig auf dem durch einen Umschlag aus Bezugsstoff (6) gebildeten Scheibenrahmen aufliegend mit diesem und der Scheibe (2) derart vernäht ist, daß die Naht (90) lediglich am Rand (30) der Abdeckung (3) angeordnete zackenförmige Vorsprünge (800) durchsetzt.

13. Schutzabdeckung nach einem oder mehreren der Ansprüche 1 bis 12, dadurch gekennzeichnet, daß die Abdeckung (3) mit dem Scheibenrahmen (6) und der Scheibe (2) lediglich entlang eines Scheibenrandes über zackenförmige Vorsprünge (800) vernäht ist und die verbleibenden drei Ränder mindestens um den Betrag der Breite des Scheibenrahmens (6) überragt, sowie in diesen Bereichen lose auf dem Scheibenrahmen (6) aufliegt.

## Claims

1. Protective cover for windscreens which are sensitive to scratching, in particular rear windscreens in folding cabriolet roofs, which are welded along their periphery in a border of covering fabric forming the windscreen frame and are additionally stitched to the latter and during the manufacture and assembly of the roof are provided with a cover consisting of a mechanically weak, but soft material, which is neutral with respect to the windscreen material, for example with a fleece and a film of high mechanical strength, characterised in that the protective cover (3) is stitched in and for easier removal is provided on its stitched-in edge zones with jagged (8, 800) or interrupted edge sections (7).

2. Protective cover according to Claim 1, characterised in that along at least two of its peripheral edges the cover (3) comprises jagged projections (8, 800) overlapping the inside windscreen surface and that these projections are stitched to the border of covering fabric forming the windscreen frame (6) and to the windscreen (2).

3. Protective cover according to Claims 1 and 2, characterised in that the jagged projections (8, 800) taper towards their free end and in the region of the base of their profile are connected to each other by cut-outs (11) which are in the shape of at least part of a circle, the cut-outs (11) which are in the shape of part of a circle likewise also being located outside the inside surface area of the windscreen (2).

4. Protective cover according to one of the preceding Claims 1 to 3, characterised in that the cover (3) consists of two overlapping sections (3a and 3b) or parts, which along at least their respective longitudinal edges are stitched by means of flap or jag arrangements projecting beyond the inside windscreen surface, to the border of covering fabric (6) forming the windscreen frame and to the windscreen (2).

5. Protective cover according to one or more of the preceding Claims 1 to 4, characterised in that at least one of the two cover sections (3a and 3b) or cover parts is provided at least along one narrow side of the inside windscreen surface with a loose flap (12) overlapping the latter and forming a hand-grip.

6. Protective cover according to one or more of the preceding Claims 1 to 5, characterised in that the two cover sections (3a, 3b) can be connected to each other temporarily and repetitively one below the other by adhesive surface sections (14) arranged with a mutual overlapping region.

7. Protective cover according to one or more of the preceding Claims 1 to 6, characterised in that the adhesive surface sections (14) are formed by superimposed sections of adhesive strip or the like.

8. Protective cover according to Claims 1 to 7, characterised in that the seam (9) passing through the cover (3), the border of covering fabric (6) and the windscreen (2) is located at a distance from their peripheral edges outside the inside surface area of the windscreen (2).

9. Protective cover according to Claim 8, characterised in that along at least its two longitudinal edge regions, the cover (3) comprises flaps (7) overlapping the inside surface area of the windscreen (2) and arranged at a distance apart and is stitched by the latter to the border (6) forming the windscreen frame and to the windscreen (2).

10. Protective cover according to Claim 9, characterised in that the flaps (7) of the cover (3) overlapping the inside surface area of the windscreen are located at a distance apart, which amounts to several times their longitudinal extent.

11. Protective cover according to one or more of the preceding Claims 9 and 10, characterised in that the flaps (7) overlapping the inside surface area of the windscreen (2) are constructed over the entire periphery of the windscreen on the cover (3).

12. Protective cover for windscreens which are sensitive to scratching, in particular rear windscreens in folding cabriolet roofs, which are welded along their periphery in a border of covering fabric forming the windscreen frame and are additionally stitched to the latter and during the manufacture and assembly of the roof are provided with a cover consisting of a mechanically weak, but soft material, which is neutral with respect to the material of the windscreen, for example of a fleece and a film of high mechanical strength, characterised in that the cover (3) is stitched on the outside to the windscreen frame formed by a border of covering fabric (6), resting thereon, and to the windscreen (2) so that the seam (90) passes through jagged projections (800) located solely on the edge (30) of the cover (3).

13. Protective cover according to one or more of Claims 1 to 12, characterised in that the cover (3) is stitched to the windscreen frame (6) and the windscreen (2) solely along one edge of the windscreen by way of jagged projections (800) and overlaps the remaining three edges at least by the amount of the width of the windscreen frame (6), and in these regions rests loosely on the windscreen frame (6).

**Revendications**

1. Ecran protecteur pour fenêtres transparentes sensibles aux éraflures, en particulier pour lunettes arrières de capotes pliables de cabriolets, qui sont soudées par leurs bords dans le pli d'un morceau rabattu en matériau de recouvrement constituant le cadre de la fenêtre, qui sont cousues avec ledit cadre de fenêtre et qui sont pourvues, pendant la fabrication et le montage de la capote pliable, d'un écran constitué d'un élément souple en matériau mécaniquement faible mais neutre par rapport au matériau de la fenêtre, par exemple d'un non-tissé, et d'une feuille de résistance mécanique éléveé, *caractérisé en ce que* l'écran (3) qui est cousu, comporte le long des coutures des bords dentelés (8), (800), ou à avancées (7) disposées à une certaine distance l'une de l'autre.

2. Ecran protecteur selon la revendication 1 *ca-*

ractérisé en ce que l'écran (3) comporte au moins sur deux de ses côtés des bords avec des saillies (8), (80) en forme de dents, qui dépassent la surface transparente de la fenêtre et *en ce que* lesdits bords sont cousus avec la fenêtre (2) et le morceau rabattu (6) en matériau de recouvrement constituant le cadre de fenêtre.

3. Ecran protecteur selon les revendications 1 et 2 *caractérisé en ce que* les saillies en forme de dents (8), (800) comportent une extrémité libre en forme de pointe alors que leurs bases sont reliées par des segments arrondis (11) également disposés à l'extérieur de la surface transparente de la fenêtre (2).

4. Ecran protecteur selon une ou plusieurs des revendications précédentes *caractérisé en ce que* l'écran (3) se compose de deux parties (3a), (3b) se recouvrant l'une l'autre, qui sont cousues, au moins par leurs bords longitudinaux, avec la fenêtre (2) et le morceau rabattu (6) en matériau de recouvrement constituant le cadre de la fenêtre, et qui comportent le long des coutures des bords en forme de dents ou de lobes dépassant la surface transparente de la fenêtre.

5. Ecran protecteur selon une ou plusieurs des revendications précédentes *caractérisé en ce que* au moins l'une des parties (3a), (3b) composant l'écran (3) comporte le long d'au moins un des côtés étroits de la fenêtre une saillie (12) lâche, dépassant la surface transparente de la fenêtre et servant de poignée.

6. Ecran protecteur selon une ou plusieurs des revendications précédentes *caractérisé en ce que* les deux parties (3a), (3b) composant l'écran (3) peuvent être assemblées provisoirement et à plusieurs reprises grâce à des surfaces adhésives (14) disposées dans leur zone de recouvrement réciproque.

7. Ecran protecteur selon une ou plusieurs des revendications précédentes *caractérisé en ce que* les surfaces adhésives (14) sont constituées de morceaux de bande adhésive ou éléments similaires qui sont rapportés.

8. Ecran protecteur selon une ou plusieurs des revendications précédentes *caractérisé en ce que* la couture (9) traversant l'écran (3), la fenêtre (2) et le cadre de la fenêtre (6) est disposée à une certaine distance à l'extérieur du bord périphérique de la surface transparente de la fenêtre (2).

9. Ecran protecteur selon la revendication 8 *caractérisé en ce que* l'écran (3) comporte au moins le long de ses bords longitudinaux des lobes (7) disposés à une certaines distances l'un de l'autre et dépassant la surface transparente de la fenêtre et *en ce que* lesdits bords longitudinaux de l'écran sont cousins avec la fenêtre (2) et le cadre de la fenêtre (6).

10. Ecran protecteur selon la revendication 9 *caractérisé en ce que* les lobes (7) de l'écran (3) dépassant la surface transparente de la fenêtre (2) sont disposés à une distance l'un de l'autre qui correspond à un multiple de leur longueur.

11. Ecran protecteur selon au moins l'une des revendications 9 et 10 *caractérisé en ce que* l'écran comporte des lobes (7) dépassant la surface transparente de la fenêtre sur tout son pourtour.

12. Ecran protecteur pour fenêtres transparentes sensibles aux éraflures, en particulier pour lunettes arrières de capotes pliables de cabriolets, qui sont soudées par leurs bords dans le pli d'un morceau rabattu en matériau de recouvrement constituant le cadre de la fenêtre, qui sont cousues avec ledit cadre et qui sont pourvues pendant la fabrication et le montage de la capote pliable, d'un écran constitué d'un élément souple en matériau mécaniquement faible mais neutre par rapport au matériau de la fenêtre, par exemple d'une toison, et d'une feuille de résistance mécanique élevée, *caractérisé en ce que* l'écran s'appuie de l'extérieur sur le cadre de la fenêtre (6) constitué d'un morceau rabattu de matériau de recouvrement et est cousu avec ledit cadre (6) et la fenêtre (2) de telle sorte que la couture (90) traverse uniquement le bord (30) de l'écran (3) comportant des saillies en forme de dents (800).

13. Ecran protecteur selon une cu plusieurs des revendications 1 à 12 *caractérisé en ce que* l'écran (3) est cousin avec la fenêtre (2) et le cadre de la fenêtre (6) uniquement le long d'un des côtés de la fenêtre par un bord comportant des saillies (800) en forme de dents et dépasse les trois côtés restants de la fenêtre d'une largeur correspondant au moins à celle du cadre de la fenêtre (6) en s'y appuyant de façon lâche.

# FIG. 1

## FIG. 2

## FIG. 4

FIG. 3

FIG. 5

# FIG. 6